# EUROPEAN PATENT APPLICATION

(11) **EP 2 878 207 A1**
(43) Date of publication of application: **03.06.2015**
(21) Application number: 14194963.6
(22) Date of filing: 26.11.2014
(51) Int. Cl.: A23G 1/26, A23G 3/02, A23G 3/20, B65G 47/00, A23L 3/005, A23L 3/18, A23B 5/005

(54) **AN INDEPENDENT MODULE FOR HEAT TREATING FOOD PRODUCT FLUIDS, ADAPTABLE ON A PASTEURIZING SYSTEM**

(30) Priority: 02.12.2013 IT VR20130265
(71) Applicant: Sanovo Technology Italia S.R.L., 36030 Montecchio Precalcino (VI) (IT)
(72) Inventor: Colavitti, Roberto, 36077 Altavilla Vicentina (Vicenza) (IT); Balasso, Mauro, 36030 Sarcedo (Vicenza) (IT); Bonetto, Mauro, 36100 Vicenza (IT)
(74) Representative: Lissandrini, Marco

(57) **Abstract**

Described is an independent module for heat treating food product fluids (1), for a pasteurizing system, the module (1) comprising: a selection/exclusion unit (10) for interfacing the module (1) to an external pasteurizing system (P), the selection/exclusion unit (10) being active between a consent configuration, wherein it is enabled for the exchange of a flow of food product fluid between a pasteurizing system (P) and the module (1), and an exclusion configuration, wherein the exchange of a flow of food product fluid between a pasteurizing system (P) and the module (1) is disabled; a pumping unit (20) to impart a predetermined pressure on a flow of food product fluid already pasteurized coming from a pasteurizing system (P) through the selection/exclusion unit (10); a heating unit (30) for heating to a predetermined temperature the flow of food product fluid already pasteurized coming from the pumping unit (20); an adaptation unit (40) having an inlet for receiving the flow of food product fluid coming from the heating unit (30) and an outlet for sending the fluid to the selection/exclusion unit (10), the adaptation unit (40) varying the pressure and temperature values of the flow of food product fluid coming from the heating unit (30) to make them substantially coincide with the operation pressure and temperature values of the external pasteurizing system (P).

## Description

This invention relates to an independent module for heat treating food product fluids, for a pasteurizing system.

The invention operates in the sector of pasteurizing food products, with the aim of reducing the bacterial charge and extending the shelf-life of the product for preserving almost unchanged the functional properties of the product. More in detail, the invention finds particular use in the sector for pasteurizing egg-based food products, both in a liquid and semi-liquid form. More specifically, the expression "egg-based" refers to products containing only egg white, only egg yolk or a mixture of them, or even mixtures of products in which the eggs are the main ingredient.

As is known, egg-based liquid or semi-liquid products - for example to be used for preparing pastes for food products, cake and pastry fillings or beverages - must be pasteurised to guarantee a reduction in the bacterial charge. For that purpose, the products are typically pasteurised at a temperature of between 56°C and 70°C; after the pasteurizing, the products normally undergo an "isothermal period" for a predetermined period of time inside insulated pipes. The term "isothermal period" is used to mean a step wherein the product, although moving forward inside a duct, is not subjected to any thermal heating treatment.

According to a first prior art technique, the pasteurizing systems comprise the following main stations:
- a pump for circulating the product in a liquid or semi-liquid form inside the ducts of the pasteurizing system;
- a heat exchanger - commonly known as "pasteurizer" - generally of the plate or tubular type, for heating the product to the pasteurizing temperature, typically between 56°C and 70°C in the case of egg-based products;

- an isothermal control unit, typically made using an insulated duct wound in the form of a spiral;
- a cooling unit, to cool the pasteurized product to the preservation and storage temperature, typically between 2°C and 6°C.

To improve the energy efficiency, some systems are equipped with a heat recovery unit which allows the heat exchange between the product already pasteurized (hot) feeding out of the isothermal control unit and the product to be pasteurized (cold) entering the pasteurizer.

Often, the traditional pasteurizing systems comprise a homogenizer, generally interposed between the pump and the pasteurizer, to favour a better mixing between egg yolk and egg white breaking the particles of grease contained in the egg yolk to create a more homogeneous and stable product.

According to a second prior art technique, there are systems for pasteurizing egg-based products equipped with a second heating system designed to perform a second heat treatment on the product already previously pasteurized. More in detail, the second heat treatment is of the direct type, that is to say, it is performed with a heating means directly in contact with the product, for example by means of an applied or radiated electrical system. The second thermal heating is performed at a temperature of approximately 75°C and makes it possible to effectively reduce the residual bacterial charge which remains in the product at the end of the first pasteurising heat treatment. In that way, at the end of an entire process which comprises two thermal heating treatments (pasteurizing + second heat treatment) there is a reduction in the bacterial charge by approximately one logarithm greater than that of the pasteurizing systems comprising a single heat treatment (traditional pasteurizing) of the product whilst keeping almost intact the organoleptic properties of the finished product.

It should be noted that a second heating of the product already pasteurized up to temperatures greater than the traditional pasteurizing temperatures (i.e. 56°C - 70°C for egg-based products) must be very fast, to prevent deterioration of the product; in the specific case of an egg-based liquid or semi-liquid product, a second heating to a high temperature (approximately 75°C) which occurs in a long period of time, typically greater than 3 seconds, would cause curdling of the product.

To perform a fast second heating and reach the temperature necessary to guarantee a further reduction of the bacterial charge in a short time, it is necessary to reduce the cross-section of the duct for conveying the food product fluid; in this way, the heat is distributed in the product in a faster and more uniform manner. In this regard, in the prior art pasteurizing systems, the second heat treatment is generally performed using a direct heating system, for example with direct application of an electric field or radiating a high-frequency electric field (radio-frequency or microwaves). The reduction of the duct cross section, with the same flow rate of the food product, requires an increase in the flow speed and, therefore, of the delivery pressure of the fluid. This circumstance results in the insertion of a high pressure pump in the pasteurizing system, typically a pump which is able to impart a pressure increase of more than 16 bar. Disadvantageously, the insertion of the high pressure pump makes it essential to replace the ducts for conveying the fluid, to make them able to withstand higher operating pressures. Moreover, it is necessary to replace, or at least adapt, the isothermal control unit, the cooling unit and any heat recovery units, to make them able to withstand high pressures. In addition, the pasteurizer which is already in service may have structural limitations which do not allow the use at high pressures, therefore making it impossible to transform the pasteurizing system from a single pasteurizing system to a system with pasteurizing and second heating of the product already pasteurized.

If the traditional pasteurizing system is equipped with a high pressure pump, for example for product homogenization requirements, the performance of a second heating on the product already pasteurized would involve a resizing, and a replacement, of the conveying ducts, to guarantee that their cross-section is sufficiently reduced so as to ensure that the second heating is performed quickly. Disadvantageously, the installation of a second heating system for the heat treatment of the products already pasteurised results in a plant stoppage, with a consequent drop in productivity and costs for replacement/adaptation of the functional components of the system.

In short, the interdependence between the speeds, cross sections of conveying ducts, fluid flow rate and pressure requires a careful sizing of the pasteurizing system during the design phase and does not allow, disadvantageously, the installation of a second heating system on existing systems, without significant constructional modifications.

Currently, therefore, the installation of a second heating system on existing pasteurizing systems is an extremely complex operation and, in some cases, even impossible due to operational problems and intervention costs.

In this context, the technical purpose which forms the basis of this invention is to provide an independent module for heat treating food product fluids, for a pasteurizing system, which resolves the above-mentioned drawbacks. More specifically, the aim of this invention is to provide an independent module for heat treating food product fluids, for a pasteurizing system, which can be installed on a pasteurizing system already in service without requiring any modification of the functional components of the system.

Another aim of this invention is to provide an independent heat treatment module which can be activated/deactivated without interfering with the operation of the pasteurizing system.

A further aim of this invention is to provide an independent heat treatment module which is easy to wash.

Another aim of this invention is to provide an independent heat treatment module which is reliable and inexpensive to make.

The technical purpose indicated and the aims specified are substantially achieved by an independent module for heat treating food product fluids, for a pasteurizing system, the module comprising the technical features described in one or more of the appended claims. The dependent claims correspond to further embodiments of an independent module according to this invention.

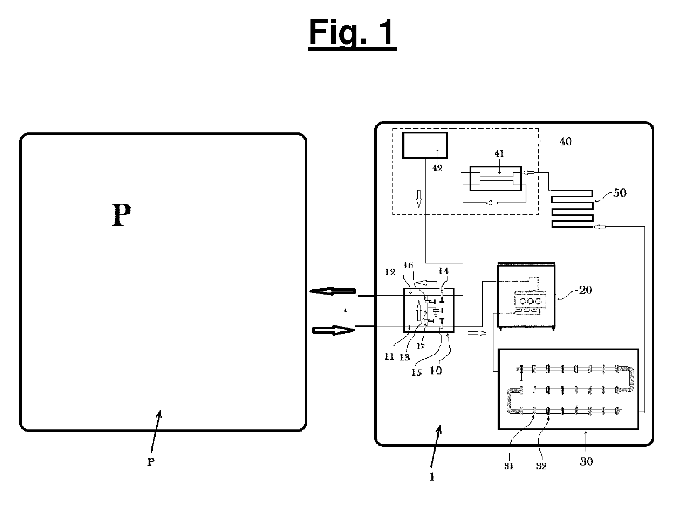

Further features and advantages of this invention are more apparent in the non-limiting description which follows of a preferred, non-limiting embodiment of an independent module for heat treating food product fluids, for a pasteurizing system, as shown in the accompanying drawings, wherein Figure 1 is a functional diagram of the independent module according to the invention.

With reference to the diagram in Figure 1, an independent module for heat treating food product fluids, for a pasteurizing system, is denoted in its entirety with numeral 1.

The module 1 comprises a selection/exclusion unit 10 for interfacing the module 1 to an external pasteurizing system P. Advantageously, the external pasteurizing system P can be a system which is already in service and operating.

More in detail, the selection/exclusion unit 10 is active between a consent configuration, wherein the exchange of food product fluid between the pasteurizing system P and the module 1 is enabled, and an exclusion configuration, wherein the exchange of food product fluid between the pasteurizing system P and the module 1 is disabled.

According to the preferred variant embodiment, the food product treated by the external pasteurizer P is a liquid or semi-liquid fluid based on eggs or egg components, as defined in the previous paragraphs. Before entering the independent heat treatment module 1, the fluid is pasteurized in a traditional manner, preferably at a temperature of between approximately 56°C and approximately 70°C.

According to the preferred embodiment, the selection/exclusion unit 10 comprises a delivery duct 11 for the inflow into the module 1 of a flow of food product fluid already pasteurized coming from the external pasteurizing system P. The selection/exclusion unit 10 also comprises a return duct 12 for the outflow of a flow of food product fluid from the module 1 towards the external pasteurizing system P.

The selection/exclusion unit 10 also comprises consent/obstruction means for enabling/excluding the exchange of food product fluid between the pasteurizing system P and the module 1. Preferably, the consent/obstruction means comprise an auxiliary duct 13 for connecting together the delivery duct 11 and return duct 12, a pair of main shutters 14, 15 positioned, respectively, on the delivery duct 11 and return duct 12 and an auxiliary shutter 16 positioned on the auxiliary duct 13. Even more preferably, the auxiliary duct 13 comprises a pair of auxiliary shutters 16, 17 which define a double safety sub-system to guarantee that the product (simply pasteurized) entering the module does not accidentally come into contact with the product (pasteurized and further heat treated, as explained in more detail below) leaving the module. More specifically, the consent/obstruction means enable the exchange of food product fluid between the pasteurizing system P and the module 1, when the main shutters 14, 15 adopt a configuration allowing the passage of fluid and when the auxiliary shutter 16 simultaneously adopts a configuration obstructing the passage of fluid; vice versa, the consent/obstruction means disable the exchange of fluid between the pasteurizing system and the module 1, when the main shutters 14, 15 adopt a configuration obstructing the passage of fluid and when the auxiliary shutter 16 simultaneously adopts a configuration allowing the passage of fluid.

With reference to Figure 1, the module 1 comprises a pumping unit 20 to impart a predetermined pressure, preferably between approximately 10 bar and approximately 50 bar, on the flow of food product fluid already pasteurized coming from the pasteurizing system P through the above-mentioned selection/exclusion unit 10. Preferably, the pumping unit 20 comprises a pump and a device for measuring the pressure of the flow of food product fluid flowing into the pump and coming from the external pasteurizing system P through the selection/exclusion unit 10. The pumping unit also comprises a control unit, typically an electronic processor, operatively connected to the pump and to the measuring device to adjust the operation of the pump, in such a way as to keep constant the pressure of the fluid entering the pump. Preferably, the control unit keeps the pressure of the fluid constant, adjusting the operating speed of the pump, typically of the volumetric type. Advantageously, maintaining a constant pressure at the pump infeed ensures that the pressure of the fluid present in the external pasteurizer P is not altered by the operation of the module 1 and therefore guarantees the correct operation of the external pasteurizing system, regardless of the presence of the module 1.

According to a possible alternative embodiment, the pumping unit 20 also comprises a "homogenizing" valve (for example equipped with a neck) designed to homogenize the flow of food product fluid coming from the external pasteurizing system P through the selection/exclusion unit 10. It is known that for egg-based products to be pasteurised at high temperatures, they must be homogenized to create a homogeneous structure of egg yolk and egg white. Advantageously, if the pasteurizing system P is not equipped with a homogenizer, the pumping unit 20 equipped with homogenizing valve avoids the insertion of a homogenizer in the system P, reducing - still more advantageously - maintenance costs and stoppages. With reference to Figure 1, the module 1 also comprises a heating unit 30 to heat to a predetermined temperature the flow of food product fluid already pasteurized coming from the pumping unit 20. In the specific case of egg-based products, the heating unit 30 heats the food product fluid to a temperature higher than the pasteurizing temperature, preferably to a temperature of between approximately 60°C and approximately 78°C.

More in detail:
- in the case of egg white, which is typically pasteurized at 56°C - 58°C, the heating unit 30 heats it up to 60°C - 65°C;
- in the case of egg yolk, which is typically pasteurized at 64°C - 67°C, the heating unit 30 heats it up to 72°C - 73°C;
- in the case of an egg white-yolk mixture, which is typically pasteurised at 62°C - 70°C, the heating unit 30 heats it up to 73°C - 78°C.

It should be noted that when the consent/obstruction means of the selection/exclusion unit 10 enable the exchange of food product fluid between the pasteurizing system P and the module 1, the flow of fluid already pasteurized which flows in the conveying pipes of the pasteurizing system (downstream of the pasteurizer) is entirely conveyed into the module 1, to be advantageously subjected to the second heat treatment. With reference to Figure 1, the module 1 also comprises an adaptation unit 40 having an inlet for receiving the flow of food product fluid coming from the heating unit 30 and an outlet for sending the fluid to the selection/exclusion unit 10. More specifically, the adaptation unit 40 modifies the pressure and temperature values of the flow of food product fluid coming from the heating unit 30, to make them substantially coincide with the pressure and temperature values of operation of the external pasteurizing system P. Advantageously, the heated food product fluid from the module 1 may be re-introduced into the pasteurizing system through the return duct 12 of the selection/exclusion unit 10, without altering the process parameters of the external pasteurizing system P, thereby guaranteeing the correct operation. Moreover, it should be noted that when the consent/obstruction means of the selection/exclusion unit enable the exchange of food product fluid between the pasteurizing system P and the module 1, the flow of fluid heated by the heating unit 30 and coming from the adaptation unit 40 is entirely re-introduced into the pasteurizing system through the return duct 12 of the selection/exclusion unit 10.

Advantageously, therefore, pressure, temperature and flow rate of the external pasteurizing system P are not altered by the presence of the module 1.

With reference to Figure 1, the above-mentioned adaptation unit 40 comprises a cooling unit 41 to cool the flow of food product fluid coming from the previous treatment units, in such a way that the temperature of the fluid flowing out from the module 1 substantially coincides with an operating temperature of the external pasteurizing system P. Moreover, the adaptation unit 40 comprises an expansion unit 42 for expanding the flow of food product fluid coming from the previous treatment units, in such a way that the pressure of the fluid flowing out from the module 1 substantially coincides with an operating pressure of the external pasteurizing system P.

Preferably, the heating unit 30 comprises at least two electrodes 31, 32 spaced from each other along a duct of flowing of the food product fluid. The electrodes are electrically powered to define an electric field between them in which, in use, the food product fluid is immersed; in more detail, each electrode is in electrical contact with the fluid to circulate an electric current through the fluid, the electric current heating the product, it having a respective resistivity.

In the variant embodiment illustrated in Figure 1, it is possible to use a plurality of pairs of electrodes 31, 32, so as to modulate the heat generated inside the food product fluid.

Preferably, the module 1 also comprises an isothermal control unit 50 interposed between the heating unit 30 and the adaptation unit 40, to receive a flow of food product fluid and maintain it at a substantially constant temperature for a predetermined period of time. Preferably, the isothermal length of time is between approximately 10 seconds and approximately 90 seconds, depending on the type of product.

The operation of the invention is derived directly from the structure of the module and from what is described above.

This invention also relates to a pasteurizing system, comprising a module 1 according to this invention.

The invention has further important advantages.

Firstly, an independent heat treating module according to the invention can be installed on an existing pasteurizing system, without requiring any modification of the functional components of the system.

Advantageously, an independent heat treating module according to the invention may be activated/deactivated without interfering with the operation of the pasteurizing system. For this reason, if necessary, the external pasteurizing system P can operate in a traditional manner, that is to say, without subjecting the pasteurized product to a second heat treatment.

Advantageously, an independent module according to the invention is easily installed, thanks to the presence of the selection/exclusion unit.

## Claims

1. An independent module (1) for heat treating food product fluids, for a pasteurizing system, the module (1) being **characterised in that** it comprises:
- a selection/exclusion unit (10) for interfacing the module (1) to an external pasteurizing system (P), the selection/exclusion unit (10) operating between a consent configuration, wherein the exchange of a flow of food product fluid between a pasteurizing system (P) and the module (1) is enabled, and an exclusion configuration, wherein the exchange of a flow of food product fluid between a pasteurizing system (P) and the module (1) is disabled;
- a pumping unit (20) to impart a predetermined pressure on a flow of food product fluid already pasteurized coming from a pasteurizing system (P) through the selection/exclusion unit (10);
- a heating unit (30) to heat to a predetermined temperature the flow of food product fluid already pasteurized coming from the pumping unit (20);
- an adaptation unit (40) having an inlet for receiving the flow of food product fluid coming from the heating unit (30) and an outlet for sending the fluid to the selection/exclusion unit (10), the adaptation unit (40) modifying the pressure and temperature values of the flow of food product fluid coming from the heating unit (30), in such a way that they substantially coincide with the operating pressure and temperature values of the external pasteurizing system (P).

2. The module (1) according to claim 1, wherein the selection/exclusion unit (10) comprises:
- a delivery duct (11) for the inflow into the module (1) of a flow of food product fluid already pasteurized coming from an external pasteurizing system (P);
- a return duct (12) for the outflow of a flow of food product fluid from the module (1) towards the external pasteurizing system (P);
- consent/obstruction means for enabling/excluding the exchange of food product fluid between the pasteurizing system (P) and the module (1).

3. The module (1) according to claim 2, wherein the consent/obstruction means comprise:
- an auxiliary duct (13) for connecting together the delivery duct (11) and the return duct (12);
- at least one pair of main shutters (14, 15) positioned on the delivery duct (11) and return duct (12);
- at least one auxiliary shutter (16) positioned on the auxiliary duct (13),
the consent/obstruction means enabling the exchange of food product fluid between a pasteurizing system (P) and the module (1), when the main shutters (14, 15) adopt a configuration allowing the passage of fluid and when the at least one auxiliary shutter (16, 17) simultaneously adopts a configuration obstructing the passage of fluid; the consent/obstruction means disabling the exchange of fluid between a pasteurizing system and the module (1), when the main shutters (14, 15) adopt a configuration obstructing the passage of fluid and when the at least one auxiliary shutter (16, 17) simultaneously adopts a configuration allowing the passage of fluid.

4. The module (1) according to any one of the preceding claims, wherein the adaptation unit (40) comprises:
- a cooling unit (41) for cooling a flow of food product fluid coming from the previous treatment units, in such a way that the temperature of the fluid flowing out from the module (1) substantially coincides with an operating temperature of the pasteurizing system (P);
- an expansion unit (42) for expanding a flow of food product fluid coming from the previous treatment units, in such a way that the pressure of the fluid flowing out from the module (1) substantially coincides with an operating pressure of the pasteurizing system (P).

5. The module (1) according to any one of the preceding claims, wherein the pumping unit (20) comprises:
- a pump;
- a device for measuring the pressure of the flow of food product fluid flowing into the pump and coming from the external pasteurizing system (P) through the selection/exclusion unit (10);
- a control unit operatively connected to the pump and to the measuring device to adjust the operation of the pump, in such a way as to keep constant the pressure of the fluid entering the pump.

6. The module (1) according to any one of the preceding claims, wherein the pumping unit (20) also comprises a valve with neck designed to homogenize the flow of food product fluid coming from the external pasteurizing system (P) through the selection/exclusion unit (10).

7. The module (1) according to any one of the preceding claims, wherein the heating unit (30) comprises at least two electrodes spaced apart from each other along a duct for the flowing of the food product fluid, the electrodes being supplied electrically for defining an electrical field between them in which, in use, the food product fluid is immersed, each electrode being in electrical contact with the fluid for circulating an electrical current through the fluid, in such a way as to form a direct heating circuit.

8. The module (1) according to any one of the preceding claims, also comprising an isothermal control unit (50) interposed between the heating unit (30) and the adaptation unit (40) to receive a flow of food product fluid and maintain it at a substantially constant temperature for a predetermined period of time.

9. The module (1) according to any one of the preceding claims, wherein the food product fluid is based on eggs or egg components.

10. The module (1) according to claim 9, wherein the food product fluid entering the module (1) through the selection/exclusion unit (2) is pasteurized at a temperature of between approximately 56°C and approximately 70°C.

11. The module (1) according to claim 10, wherein the heating unit (30) heats the food product fluid to a temperature higher than the pasteurizing temperature, preferably at a temperature of between approximately 60°C and approximately 78°C.

12. A pasteurizing system, **characterised in that** it comprises a module (1) according to any one of the preceding claims.
